# EUROPEAN PATENT APPLICATION

(11) **EP 4 336 228 A1**
(43) Date of publication of application: **13.03.2024**
(21) Application number: 23194667.4
(22) Date of filing: 31.08.2023
(51) Int. Cl.: G02B 5/08, C09D 5/26

(54) **TEMPERATURE-ACTIVE COATING ON A COMPONENT**

(30) Priority: 02.09.2022 US 202263403535 P; 14.07.2023 US 202318352709
(71) Applicant: Viavi Solutions Inc., Chandler, AZ 85286 (US)
(72) Inventor: LINGG, Linda, Palo Alto 94306 (US)
(74) Representative: Murgitroyd & Company

(57) **Abstract**

In some implementations, a component includes a substrate, a base coating disposed on the substrate, and a temperature-active coating disposed on the base coating. The temperature-active coating is configured to undergo a phase change when the component is subject to an ambient temperature that is greater than or equal to a first temperature threshold and less than or equal to a second temperature threshold, which is greater than the first temperature threshold. The substrate and the base coating are configured to not undergo respective phase changes when the component is subject to an ambient temperature that is greater than or equal to the first temperature threshold and less than or equal to the second temperature threshold. The base coating may include one or more reflective structures.

## Description

### CROSS-REFERENCE TO RELATED APPLICATION

This Patent Application claims priority to U.S. Provisional Patent Application No. 63/403,535, filed on September 2, 2022, and entitled "TEMPERATURE-ACTIVE COATING ON A COMPONENT." The disclosure of the prior Application is considered part of and is incorporated by reference into this Patent Application.

### BACKGROUND

A component can include one or coatings disposed on the component. The one or more coatings may have different optical properties that cause the component to appear, to an observer of the component, to have one or more features (e.g., in terms of color, reflectivity, or other observable features).

### SUMMARY

In some implementations, a component includes a substrate; a base coating disposed on the substrate; and a temperature-active coating disposed on the base coating, wherein: the temperature-active coating is configured to undergo a phase change when the component is subject to an ambient temperature that is greater than or equal to a first temperature threshold and less than or equal to a second temperature threshold, which is greater than the first temperature threshold, and the substrate and the base coating are configured to not undergo respective phase changes when the component is subject to an ambient temperature that is greater than or equal to the first temperature threshold and less than or equal to the second temperature threshold.

The first temperature threshold may be greater than or equal to 150° Celsius, and the second temperature threshold may be less than or equal to 200° Celsius.

The the base coating may include one or more reflective structures, wherein each reflective structure may be configured to reflect greater than or equal to a threshold percentage of light associated with a spectral range from 100 nanometers to 10 micrometers, and wherein the threshold percentage of light maybe greater than or equal to 85%.

The temperature-active coating may be configured to, after undergoing a phase change when the component is subject to an ambient temperature that is greater than or equal to the first temperature threshold and less than or equal to the second temperature threshold, remain disposed on the base coating.

The temperature-active coating may be configured to, after undergoing a phase change when the component is subject to an ambient temperature that is greater than or equal to the first temperature threshold and less than or equal to the second temperature threshold: remain disposed on the base coating; and pass greater than or equal to a threshold percentage of light associated with a spectral range from 100 nanometers to 10 micrometers, wherein the threshold percentage of light may be greater than or equal to 35%.

The temperature-active coating may be configured to, after undergoing a phase change when the component is subject to an ambient temperature that is greater than or equal to the first temperature threshold and less than or equal to the second temperature threshold, no longer be disposed on the base coating.

The component may further comprise: an overcoating disposed on the temperature-active coating, wherein: the overcoating may be configured to no longer be disposed on the temperature-active coating after the temperature-active coating undergoes a phase change when the component is subject to an ambient temperature that is greater than or equal to the first temperature threshold and less than or equal to the second temperature threshold.

The overcoating may be configured to, when disposed on the temperature-active coating, block greater than or equal to a threshold percentage of light associated with a spectral range from 100 nanometers to 10 micrometers, wherein the threshold percentage of light may be greater than or equal to 85%.

In some implementations, a component includes a substrate; and a base coating disposed on the substrate, wherein: the base coating includes one or more reflective structures, wherein each reflective structure includes a core structure and a temperature-active coating disposed on the core structure, wherein: the temperature-active coating is configured to undergo a phase change when the component is subject to an ambient temperature that is greater than or equal to a first temperature threshold and less than or equal to a second temperature threshold, which is greater than the first temperature threshold, and the core structure is configured to not undergo a phase change when the component is subject to an ambient temperature that is greater than or equal to the first temperature threshold and less than or equal to the second temperature threshold.

The first temperature threshold may be greater than or equal to 150° Celsius, and the second temperature threshold may be less than or equal to 200° Celsius.

The core structure of each reflective structure may be configured to reflect greater than or equal to a threshold percentage of light associated with a spectral range from 100 nanometers to 10 micrometers, wherein the threshold percentage of light may be greater than or equal to 85%.

The temperature-active coating of each reflective structure may be configured to, after undergoing a phase change when the component is subject to an ambient temperature that is greater than or equal to the first temperature threshold and less than or equal to the second temperature threshold, remain disposed on the core structure of the reflective structure.

The temperature-active coating of each reflective structure may be configured to, after undergoing a phase change when the component is subject to an ambient temperature that is greater than or equal to the first temperature threshold and less than or equal to the second temperature threshold: remain disposed on the core structure of the reflective structure; and pass greater than or equal to a threshold percentage of light associated with a spectral range from 100 nanometers to 10 micrometers, wherein the threshold percentage of light may be greater than or equal to 35%.

The temperature-active coating of each reflective structure may be configured to, after undergoing a phase change when the component is subject to an ambient temperature that is greater than or equal to the first temperature threshold and less than or equal to the second temperature threshold, no longer be disposed on the core structure of the reflective structure.

The component may further comprise: another temperature-active coating disposed on the base coating, wherein: the other temperature-active coating may be configured to undergo a phase change when the component is subject to an ambient temperature that is greater than or equal to the first temperature threshold.

The component may further comprise: an overcoating disposed on the other temperature-active coating, wherein: the overcoating may be configured to no longer be disposed on the temperature-active coating after the temperature-active coating undergoes a phase change when the component is subject to an ambient temperature that is greater than or equal to the first temperature threshold and less than or equal to the second temperature threshold.

The overcoating may be configured to, when disposed on the other temperature-active coating, block greater than or equal to a threshold percentage of light associated with a spectral range from 100 nanometers to 10 micrometers, wherein the threshold percentage of light may be greater than or equal to 85%.

In some implementations, a component includes a base coating; a temperature-active coating disposed on the base coating; and an overcoating, wherein: the temperature-active coating is configured to undergo a phase change when the component is subject to an ambient temperature that is greater than or equal to a first temperature threshold and less than or equal to a second temperature threshold, which is greater than the first temperature threshold, and the base coating and the overcoating are configured to not undergo respective phase changes when the component is subject to an ambient temperature that is greater than or equal to the first temperature threshold and less than or equal to a second temperature threshold.

The base coating may include one or more reflective structures, wherein each reflective structure may include a core structure and another temperature-active coating disposed on the core structure, wherein the other temperature-active coating may be configured to undergo a phase change when the component is subject to an ambient temperature that is greater than or equal to the first temperature threshold.

The temperature-active coating may be configured to, after undergoing a phase change when the component is subject to an ambient temperature that is greater than or equal to the first temperature threshold and less than or equal to the second temperature threshold, no longer be disposed on the base coating; and/ or the overcoating may be configured to no longer be disposed on the temperature-active coating after the temperature-active coating undergoes a phase change when the component is subject to an ambient temperature that is greater than or equal to the first temperature threshold and less than or equal to the second temperature threshold.

### BRIEF DESCRIPTION OF THE DRAWINGS

Figs. 1A-1C are diagrams of an example implementation described herein.
Figs. 2A-2D are diagrams of an example implementation described herein.

### DETAILED DESCRIPTION

The following detailed description of example implementations refers to the accompanying drawings. The same reference numbers in different drawings may identify the same or similar elements.

In some cases, a reflective component is to provide a reflective functionality, such as to reflect light away from an object (e.g., a security article, an optical sensor device, or another type of object). However, an observer (e.g., a. human observer, an animal observer, a smart camera device, or another device) may detect light reflected by the reflective component and may determine a location and/or position of the reflective component. This may be unsightly or may detract from an appearance of the object associated with the reflective component (e.g., reflected light from the reflective component when integrated into a body of a car may diminish a physical design aesthetic of the car). Further, in some cases, the reflective component and the object may be intended to be hidden or otherwise not noticeable to an observer (e.g., the reflective component and the object may be included in a forest fire detection sensor that is not to be noticeable to animals) except in particular conditions (e.g., when a wildfire is burning).

Some implementations described herein include a component that includes at least a substrate and a temperature-active coating. In some implementations, the component may include a base coating, which is disposed on the substrate, and the temperature-active coating may be disposed on the base coating. Additionally, or alternatively, the component may include an overcoating that is disposed on the temperature-active coating.

The temperature-active coating is configured to undergo a phase change (e.g., change from a solid state to a liquid state or gas state; change from an amorphous solid state to a crystalline solid state, or vice versa; or another phase change) when the component is subject to an ambient temperature that is greater than or equal to a first temperature threshold (e.g., that is greater than or equal to 150° Celsius (C)) and less than or equal to a second temperature threshold (e.g., that is less than or equal to 200° C), which is greater than the first temperature threshold. The substrate, the base coating, and/or the overlayer are configured to not undergo a phase change when the component is subject to an ambient temperature that is greater than or equal to the first temperature threshold and less than or equal to the second temperature threshold. That is, for a particular temperature range (e.g., that is greater than or equal to the first temperature threshold and less than or equal to the second temperature threshold), the temperature-active coating is subject to undergo a phase change, while the substrate, the base coating, and/or the overlayer are not.

The base coating may include one or more reflective structures (sometimes referred to as reflective flakes) (e.g., suspended in the base coating), wherein each reflective structure may be configured to reflect greater than or equal to a threshold percentage (e.g., 85%) of light associated with a spectral range (e.g., some or all of a spectral range from 100 nanometers (nm) to 10 micrometers (µm)). The temperature-active coating and/or the overcoating may be configured to be less reflective (e.g., when the ambient temperature of the component is less than or equal to the first temperature threshold). For example, the temperature-active coating and/or the overcoating may be configured to block, to transmit, and/or to absorb greater than or equal to a threshold percentage (e.g., 85%) of light associated with the spectral range. In this way, while the ambient temperature of the component has not exceeded the first temperature threshold, the temperature-active coating and/or the overcoating may prevent light associated with the spectral range from passing to the base coating, and therefore prevent reflection of the light by the base coating. Accordingly, the temperature-active coating and/or the overcoating may conceal a reflective property of the component.

In some implementations the temperature-active coating is configured to, after undergoing a phase change (e.g., due to an ambient temperature of the component that is greater than or equal to the first temperature threshold), no longer be included in the component. For example, the temperature-active coating may dissolve, de-laminate, evaporate, or otherwise self-remove from the base coating. Accordingly, when the component includes the overcoating, the overcoating may also be configured to no longer be included in the component (e.g., because, the temperature-active coating, on which the overcoating is to be disposed, is no longer included in the component). Therefore, after the phase change of the temperature-active coating, the base coating of the component is exposed, and the base coating may reflect light associated with the spectral range that impinges the base coating. In this way, after the phase change of the temperature-active coating, the reflective property of the component is revealed.

Alternatively, in some implementations, the temperature-active coating is configured to, after undergoing a phase change (e.g., due to an ambient temperature of the component that is greater than or equal to the first temperature threshold), remain in the component. For example, the temperature-active coating may remain disposed on the base coating. Notably, because of the phase change, one or more optical properties of the temperature-active coating (or a combination of the temperature-active coating and the overcoating, when the component includes the overcoating) change. For example, the temperature-active coating (or the temperature-active coating and the overcoating) may be configured to, after the phase change, pass greater than or equal to a threshold percentage (e.g., 85%) of light associated with the spectral range. Therefore, after the phase change of the temperature-active coating, the temperature-active coating (or the temperature-active coating and the overcoating) may pass light associated with the spectral range to the base coating, and the base coating may reflect the light. In this way, after the phase change of the temperature-active coating, the reflective property of the component is revealed.

In some implementations, as an alternative to, or in addition to, disposing the temperature-active coating (e.g., as a separate set of one or more layers) on the base coating, each reflective structure that is included in the base coating may include a core structure (e.g., that has a reflective property) and a temperature-active coating (e.g., that is configured in a same or similar manner as described above) that is disposed on the core structure (e.g., that encapsulates the core structure). Accordingly, while the ambient temperature of the component has not exceeded the first temperature threshold, the temperature-active coatings of the one or more reflective structures conceal the reflective properties of the core structures of the one or more reflective structures. Further, after undergoing a phase change (e.g., due to an ambient temperature of the component that is greater than or equal to the first temperature threshold), the temperature-active coatings of the one or more reflective structures (e.g., by no longer being disposed on the core structures of the one or more reflective structures, or by remaining disposed on the core structures but with one or more different optical properties) enable the reflective properties of the core structures of the one or more reflective structures to be revealed.

In this way, some implementations enable concealment of a component, or otherwise reduce a likelihood that the component is perceptible to an observer of the component, until the component is exposed to a high-heat condition (e.g., when an ambient temperature of the component exceeds the first temperature threshold). At that time, the temperature-active coating (e.g., that is disposed on the base coating and/or that is disposed on the core structures of the one or more reflective structures of the base coating) is configured to remove itself from the component, or change one or more of its optical properties, which causes the component to be revealed to an observer (e.g., by the base coating and/or the core structures of the one or more reflective structures reflecting light).

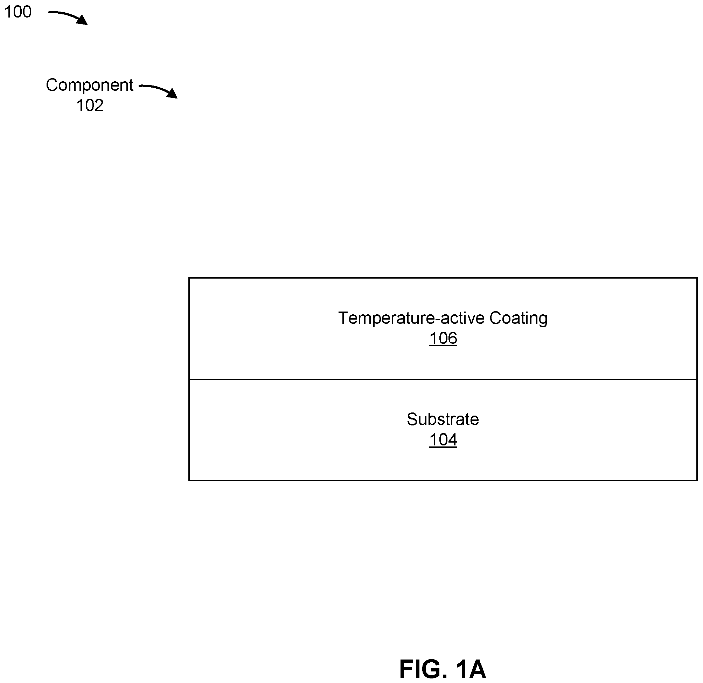

Figs. 1A-1C are diagrams of an example implementation 100 described herein. As shown in Figs. 1A-1C, the example implementation 100 includes a component 102. The component 102 may be configured to have a reflective property that is concealed until the component is subject to a high-heat condition, as further described herein. As shown in Figs. 1A-1C, the component 102 may include a substrate 104, a temperature-active coating 106, a base coating 108, and/or an overcoating 110.

As shown in Fig. 1A, the temperature-active coating 106 may be disposed on the substrate 104. For example, a bottom surface of the temperature-active coating 106 may be disposed on a top surface of the substrate 104.

The substrate 104 may be configured to enable formation of the temperature-active coating 106, the base coating 108, and/or the overcoating 110 on the substrate 104 (e.g., directly and/or indirectly on the substrate 104), such as by using a formation process (e.g., a deposition process, a painting process, a roll coating process, or another formation process). The substrate 104 may include a material that comprises at least a polymer, such as a material that comprises at least polyethylene terephthalate (PET), a material that comprises at least polybutylene terephthalate (PBT), a material that comprises at least polycarbonate (PC), a material that comprises at least polyethylene naphthalate (PEN), a material that comprises at least polyethylene furanoate (PEF), a material that comprises at least polyvinylacetate (PVAc), a material that comprises at least polyvinylchloride (PVC), a material that comprises at least polystyrene (PS), a material that comprises at least polyarylate (PAR), or a material that comprises at least polymethylmethacrylate (PMMA).

The temperature-active coating 106 may be configured to undergo a phase change when the component 102 is subject to an ambient temperature that is greater than or equal to a first temperature threshold. In this way, the temperature-active coating 106 may be referred to as having a temperature-active property. For example, when the ambient temper is greater than or equal to the first temperature threshold, the temperature-active coating 106 may be configured to change from a solid state to a liquid state or to a gas state, to change from an amorphous solid state to a crystalline solid state (or vice versa), or to have another phase change. The first temperature threshold, for example, may be 150° C, 160° C, 170° C, 180° C, or 190° C.

Further, the temperature-active coating 106 may be configured to undergo the phase change when the component 102 is subject to an ambient temperature that is greater than or equal to the first temperature threshold and less than or equal to a second temperature threshold (e.g., that is greater than the first temperature threshold). In this way, the temperature-active coating 106 may be said to be temperature-active for a particular temperature range (e.g., that is greater than or equal to the first temperature threshold and less than or equal to the second temperature threshold). The second temperature threshold, for example, may be 200° C, 225° C, 250° C, 275° C, or 300° C.

In some implementations, the substrate 104 may be configured to not undergo a phase change when the component 102 is subject to an ambient temperature that is greater than or equal to the first temperature threshold and less than or equal to the second temperature threshold. In this way, the substrate 104 may be referred to as having a temperature-inactive property. For example, the substrate 104 may be configured to not change state when the ambient temper is greater than or equal to the first temperature threshold and is less than or equal to the second temperature threshold (e.g., that is greater than the first temperature threshold). That is, the substrate 104 may be configured to have a stable state for the particular temperature range (e.g., that is greater than or equal to the first temperature threshold and less than or equal to the second temperature threshold), and may thereby be said to be temperature-inactive for the particular temperature range.

In some implementations, the temperature-active coating 106 may be configured to have one or more optical properties (e.g., prior to the temperature-active coating 106 undergoing a phase change, such as when the ambient temperature of the component 102 is less than or equal to the first temperature threshold). For example, the temperature-active coating 106 may be configured to not be reflective. As a specific example, the temperature-active coating 106 may be configured to block, to transmit, and/or to absorb (e.g., to not reflect) greater than or equal to a threshold percentage of light that is associated with a spectral range (e.g., one or more portions of the spectral range). The spectral range may be from 100 nm to 10 µm (e.g., the spectral range is greater than or equal to 100 nm and less than or equal to 10 µm). For example, the temperature-active coating 106 may be configured to block, to transmit, and/or to absorb greater than or equal to the threshold percentage of light associated with some or all of an ultraviolet (UV) spectral range (e.g., from 100 nm to 379 nm), a visible spectral range (e.g., from 380 nm to 749 nm), and/or an infrared spectral range (e.g., from 750 nm to 10 µm). The threshold percentage may be, for example, 25%, 50%, 65%, 75%, 85%, 90%, 95%, or 99%.

The temperature-active coating 106 may be, for example, a thin film coating (e.g., an optical thin film coating), and may include one or more layers. In some implementations, the temperature-active coating 106 may include a material that has a temperature-active property, such as a material that includes at least a dielectric material (e.g., that includes an oxide, such as tantalum oxide, niobium oxide, and/or titanium oxide), at least a halide material (e.g., samarium fluoride), at least a metal material (e.g., that includes gold, copper, and/or aluminum), at least a semiconductor material (e.g., silicon), and/or at least an organic material (e.g., that includes an organic dye), among other examples.

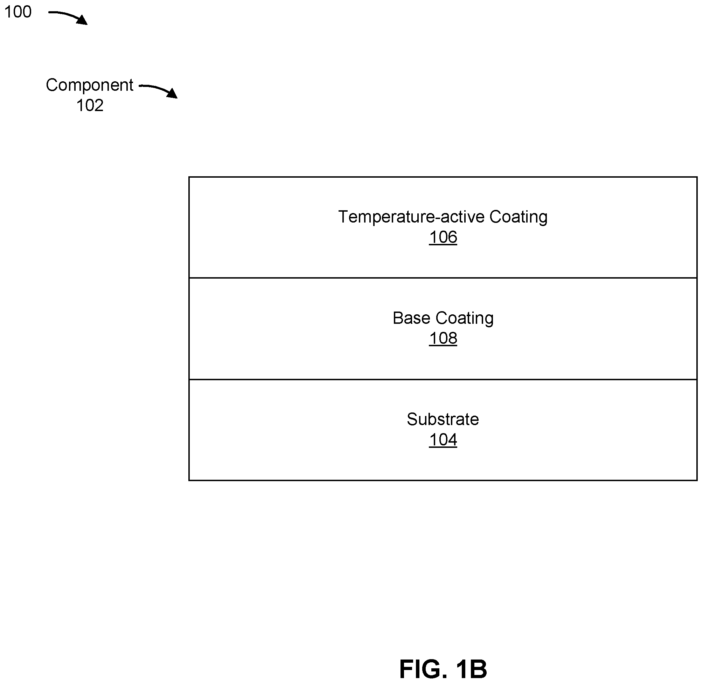

As shown in Fig. 1B, the base coating 108 may be disposed on the substrate, and the temperature-active coating 106 may be disposed on the base coating 108. For example, a bottom surface of the base coating 108 may be disposed on a top surface of the substrate 104, and the temperature-active coating 106 may be disposed on the base coating 108.

In some implementations, the base coating 108 may be configured to not undergo a phase change when the component 102 is subject to an ambient temperature that is greater than or equal to the first temperature threshold and less than or equal to the second temperature threshold. In this way, the base coating 108 may be referred to as having a temperature-inactive property (e.g., similar to the substrate 104). For example, the base coating 108 may be configured to not change state when the ambient temperature is greater than or equal to the first temperature threshold and is less than or equal to the second temperature threshold. That is, the base coating 108 may be configured to have a stable state for the particular temperature range (e.g., that is greater than or equal to the first temperature threshold and less than or equal to the second temperature threshold), and may thereby be said to be temperature-inactive for the particular temperature range.

In some implementations, the base coating 108 may be configured to have one or more optical properties (e.g., when the ambient temperature of the component 102 is less than or equal to the second temperature threshold). For example, the base coating 108 may be configured to be reflective. As a specific example, the base coating 108 may be configured to reflect greater than or equal to a threshold percentage of light that is associated with a spectral range (e.g., one or more portions of the spectral range). The spectral range may be from 100 nm to 10 µm. For example, the base coating 108 may be configured to reflect greater than or equal to the threshold percentage of light associated with some or all of the UV spectral range (e.g., from 100 nm to 379 nm), the visible spectral range (e.g., from 380 nm to 749 nm), and/or the infrared spectral range (e.g., from 750 nm to 10 µm). The threshold percentage may be, for example, 25%, 50%, 65%, 75%, 85%, 90%, 95%, or 99%.

The base coating 108 may be, for example, a thin film coating (e.g., an optical thin film coating), and may include one or more layers. In some implementations, the base coating 108 may include a material that has a temperature-inactive property and/or a reflective property, such as a material that includes at least a dielectric material (e.g., that includes an oxide, such as tantalum oxide, niobium oxide, and/or titanium oxide), at least a halide material (e.g., samarium fluoride), at least a metal material (e.g., that includes gold, copper, and/or aluminum), at least a semiconductor material (e.g., silicon), and/or at least an organic material (e.g., that includes an organic dye), among other examples. In some implementations, the base coating 108 may include one or more reflective structures (e.g., one or more reflective structures 202, described herein) that cause the base coating 108 to be reflective (e.g., as described above).

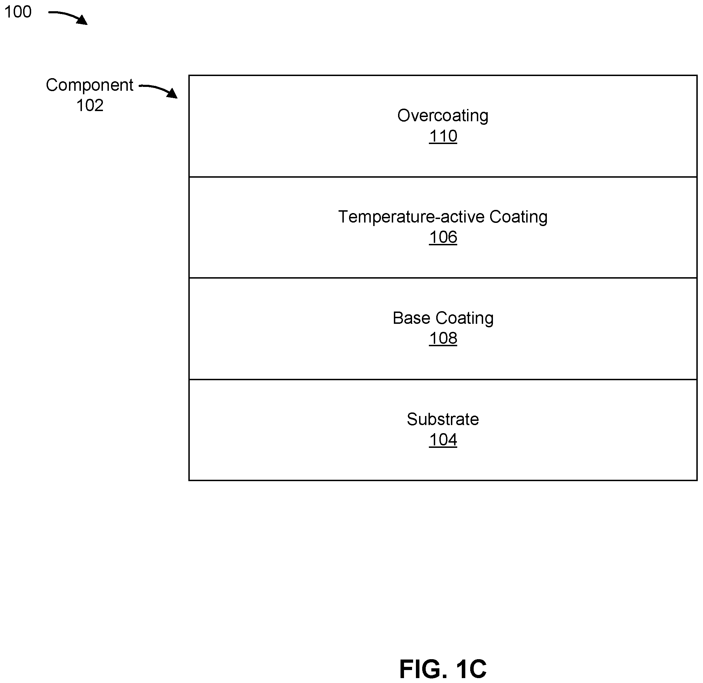

As shown in Fig. 1C, the overcoating 110 may be disposed on the temperature-active coating 106. For example, a bottom surface of the overcoating 110 may be disposed on a top surface of the temperature-active coating 106.

In some implementations, the overcoating 110 may be configured to not undergo a phase change when the component 102 is subject to an ambient temperature that is greater than or equal to the first temperature threshold and less than or equal to the second temperature threshold. In this way, the overcoating 110 may be referred to as having a temperature-inactive property (e.g., similar to the substrate 104 and the base coating 108). For example, the overcoating 110 may be configured to not change state when the ambient temperature is greater than or equal to the first temperature threshold and is less than or equal to the second temperature threshold. That is, the overcoating 110 may be configured to have a stable state for the particular temperature range (e.g., that is greater than or equal to the first temperature threshold and less than or equal to the second temperature threshold), and may thereby be said to be temperature-inactive for the particular temperature range.

In some implementations, the overcoating 110 (alone, or in combination with the temperature-active coating 106) may be configured to have one or more optical properties (e.g., prior to the temperature-active coating 106 undergoing a phase change, such as when the ambient temperature of the component 102 is less than or equal to the first temperature threshold). For example, the overcoating 110 (alone, or in combination with the temperature-active coating 106) may be configured to not be reflective. As a specific example, the overcoating 110 (alone, or in combination with the temperature-active coating 106) may be configured to block, to transmit, and/or to absorb greater than or equal to a threshold percentage of light that is associated with a spectral range (e.g., one or more portions of the spectral range). The spectral range may be from 100 nm to 10 µm. For example, the overcoating 110 (alone, or in combination with the temperature-active coating 106) may be configured to block, to transmit, and/or to absorb greater than or equal to the threshold percentage of light associated with some or all of the UV spectral range (e.g., from 100 nm to 379 nm), the visible spectral range (e.g., from 380 nm to 749 nm), and/or the infrared spectral range. The threshold percentage may be, for example, 25%, 50%, 65%, 75%, 85%, 90%, 95%, or 99%.

The overcoating 110 may be, for example, a thin film coating (e.g., an optical thin film coating), and may include one or more layers. In some implementations, the overcoating 110 may include a material that has a temperature-inactive property and/or a reflective property, such as a material that includes at least a dielectric material (e.g., that includes an oxide, such as tantalum oxide, niobium oxide, and/or titanium oxide), at least a halide material (e.g., samarium fluoride), at least a metal material (e.g., that includes gold, copper, and/or aluminum), at least a semiconductor material (e.g., silicon), and/or at least an organic material (e.g., that includes an organic dye), among other examples.

In some implementations, the temperature-active coating 106 may be configured to, after undergoing a phase change (e.g., due to an ambient temperature of the component 102 being greater than or equal to the first temperature threshold and less than or equal to the second temperature threshold), no longer be included in the component 102 (e.g., to no longer be disposed on the substrate 104 or on the base coating 108). For example, the temperature-active coating 106 may dissolve, de-laminate, evaporate, or otherwise self-remove from the substrate 104 (e.g., when initially disposed on the substrate 104, as shown in Fig. 1A) or from the base coating 108 (e.g., when initially disposed on the base coating 108, as shown in Figs. 1B-1C). Accordingly, when the component 102 includes the overcoating 110 (e.g., as shown in Fig. 1C), the overcoating 110 may also be configured to no longer be included in the component 102. For example, the overcoating 110 may be configured to no longer be disposed on the temperature-active coating 106 after the temperature-active coating 106 undergoes the phase change (e.g., because the temperature-active coating 106 is no longer included in the component 102).

Therefore, after the phase change of the temperature-active coating 106, the base coating 108 of the component 102 may be exposed (e.g., the temperature-active coating 106 and the overcoating 110, or any other coating, are not disposed on the base coating 108). Accordingly, the base coating 108 may reflect light associated with a spectral range (e.g., that the base coating 108 is configured to reflect, as described herein) that impinges the base coating 108. In this way, the component 102 may be configured to have a reflective property after the phase change of the temperature-active coating 106 (e.g., because the base coating 108 is exposed).

Alternatively, in some implementations, the temperature-active coating 106 may be configured to, after undergoing a phase change (e.g., due to an ambient temperature of the component 102 being greater than or equal to the first temperature threshold and less than or equal to the second temperature threshold), remain in the component 102. For example, the temperature-active coating 106 may remain disposed on the substrate 104 (e.g., as shown in Fig. 1A), or on the base coating 108 (e.g., as shown in Figs. 1B-1C). Notably, because of the phase change, one or more optical properties of the temperature-active coating 106 (or a combination of the temperature-active coating 106 and the overcoating 110, when the component 102 includes the overcoating 110) may change. For example, the temperature-active coating 106 (or the temperature-active coating 106 and the overcoating 110) may be configured to, after the phase change, pass greater than or equal to a threshold percentage of light that is associated with a spectral range (e.g., one or more portions of the spectral range). The spectral range may be from 100 nm to 10 µm. For example, the temperature-active coating 106 (or the temperature-active coating 106 and the overcoating 110) may be configured to pass greater than or equal to the threshold percentage of light associated with some or all of the UV spectral range (e.g., from 100 nm to 379 nm), the visible spectral range (e.g., from 380 nm to 749 nm), and/or the infrared spectral range (e.g., from 750 nm to 10 µm). The threshold percentage may be, for example, 25%, 50%, 65%, 75%, 85%, 90%, 95%, or 99%.

Therefore, after the phase change of the temperature-active coating 106, the temperature-active coating 106 (or the temperature-active coating 106 and the overcoating 110) may pass light associated with the spectral range to the base coating 108, and the base coating may reflect the light. In this way, the component 102 may be configured to have a reflective property after the phase change of the temperature-active coating 106 (e.g., because one or more optical properties of the temperature-active coating 106, or the temperature-active coating 106 and the overcoating 110, have changed).

As indicated above, Figs. 1A-1C are provided as examples. Other examples may differ from what is described with regard to Figs. 1A-1C.

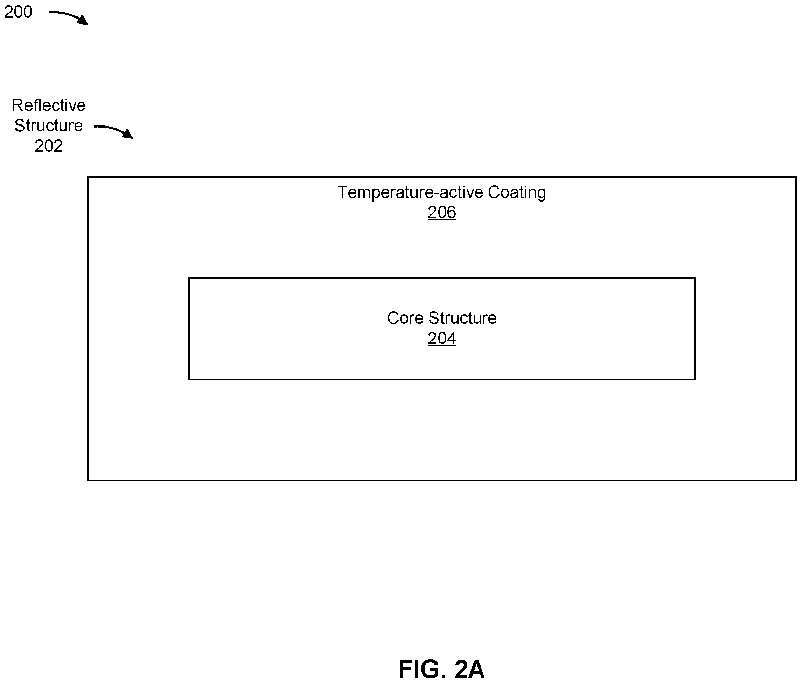

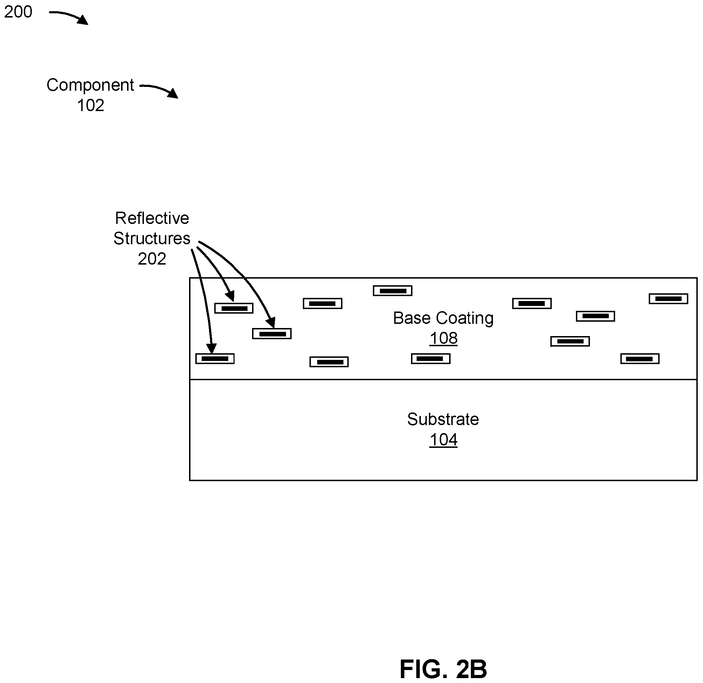

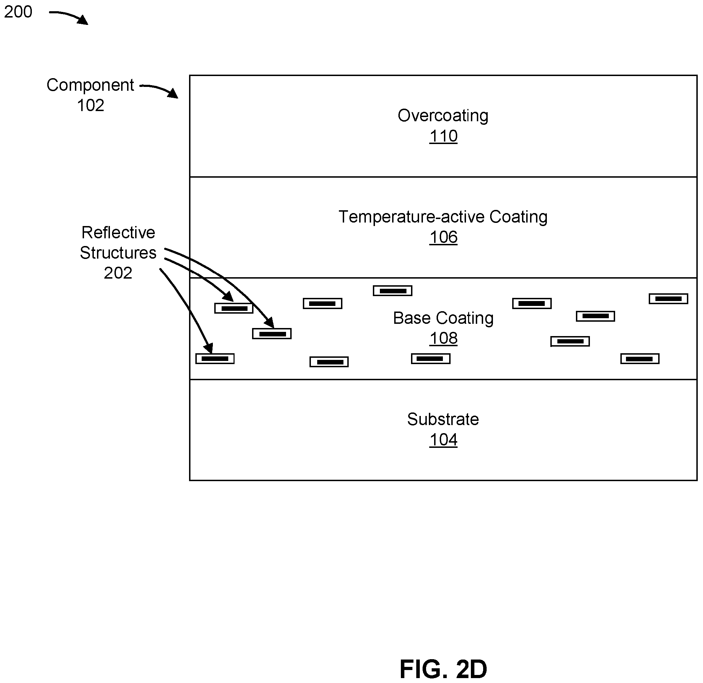

Figs. 2A-2D are diagrams of an example implementation 200 described herein. As shown in Figs. 2A-2D, one or more reflective structures 202 may be included in the component 102. Fig. 2A shows an example of a reflective structure 202, and Figs. 2B-2D show example configurations of the component 102 that include one or more reflective structures 202.

As shown in Fig. 2A, a reflective structure 202 may include a core structure 204 and/or a temperature-active coating 206. The temperature-active coating 206 may be disposed on the core structure 204. For example, the temperature-active coating 206 may surround (e.g., encapsulate) the core structure 204 (e.g., as shown in Fig. 2A), or may be disposed on one or more surfaces of the core structure 204.

The core structure 204 may be configured to not undergo a phase change when the core structure 204 (or the component 102 in which the core structure 204 is included) is subject to an ambient temperature that is greater than or equal to the first temperature threshold and less than or equal to the second temperature threshold (e.g., that are described herein in relation to Figs. 1A-1C). In this way, the core structure 204 may be referred to as having a temperature-inactive property (e.g., similar to the substrate 104, the base coating 108, and the overcoating 110). For example, the core structure 204 may be configured to not change state when the ambient temperature is greater than or equal to the first temperature threshold and is less than or equal to the second temperature threshold. That is, the core structure 204 may be configured to have a stable state for a particular temperature range (e.g., that is greater than or equal to the first temperature threshold and less than or equal to the second temperature threshold), and may thereby be said to be temperature-inactive for the particular temperature range.

In some implementations, the core structure 204 may be configured to have one or more optical properties (e.g., when the ambient temperature of the core structure 204, or the component 102 in which the core structure 204 is included, is less than or equal to the second temperature threshold). For example, the core structure 204 may be configured to be reflective (e.g., when the ambient temperature of the core structure 204, or the component 102 in which the core structure 204 is included, is less than or equal to the second temperature threshold). As a specific example, the core structure 204 may be configured to reflect greater than or equal to a threshold percentage of light that is associated with a spectral range (e.g., one or more portions of the spectral range). The spectral range may be from 100 nm to 10 µm. For example, the core structure 204 may be configured to reflect greater than or equal to the threshold percentage of light associated with some or all of the UV spectral range (e.g., from 100 nm to 379 nm), the visible spectral range (e.g., from 380 nm to 749 nm), and/or the infrared spectral range (e.g., from 750 nm to 10 µm). The threshold percentage may be, for example, 25%, 50%, 65%, 75%, 85%, 90%, 95%, or 99%.

The core structure 204 may include one or more layers. For example, the core structure 204 may include a central layer that includes at least a metal material (e.g., that includes gold, copper, and/or aluminum) and that is disposed between outer layers that include at least a dielectric material (e.g., that includes an oxide, such as tantalum oxide, niobium oxide, and/or titanium oxide).

The temperature-active coating 206 may be configured to undergo a phase change when the temperature-active coating 206 (or the component 102 in which the temperature-active coating 206 is included) is subject to an ambient temperature that is greater than or equal to the first temperature threshold and less than or equal to the second temperature threshold. In this way, the temperature-active coating 206 may be referred to as having a temperature-active property. For example, when the ambient temperature is greater than or equal to the first temperature threshold and less than or equal to the second temperature threshold, the temperature-active coating 206 may be configured to change from a solid state to a liquid state or to a gas state, to change from an amorphous solid state to a crystalline solid state (or vice versa), or to have another phase change. In this way, the temperature-active coating 106 may be said to be temperature-active for a particular temperature range (e.g., that is greater than or equal to the first temperature threshold and less than or equal to the second temperature threshold).

In some implementations, the temperature-active coating 206 may be configured to have one or more optical properties (e.g., prior to the temperature-active coating 206 undergoing a phase change, such as when the ambient temperature of the temperature-active coating 206, or the component 102 in which temperature-active coating 206 is included, is less than or equal to the first temperature threshold). For example, the temperature-active coating 206 may be configured to not be reflective. As a specific example, the temperature-active coating 206 may be configured to block, to transmit, and/or to absorb greater than or equal to a threshold percentage of light that is associated with a spectral range (e.g., one or more portions of the spectral range). The spectral range may be from 100 nm to 10 µm. For example, the temperature-active coating 206 may be configured to block, to transmit, and/or to absorb greater than or equal to the threshold percentage of light associated with some or all of the UV spectral range (e.g., from 100 nm to 379 nm), the visible spectral range (e.g., from 380 nm to 749 nm), and/or the infrared spectral range (e.g., from 750 nm to 10 µm). The threshold percentage may be, for example, 25%, 50%, 65%, 75%, 85%, 90%, 95%, or 99%

The temperature-active coating 206 may be, for example, a thin film coating (e.g., an optical thin film coating), and may include one or more layers. In some implementations, the temperature-active coating 206 may include a material that has a temperature-active property, such as a material that includes at least a dielectric material (e.g., that includes an oxide, such as tantalum oxide, niobium oxide, and/or titanium oxide), at least a halide material (e.g., samarium fluoride), at least a metal material (e.g., that includes gold, copper, and/or aluminum), at least a semiconductor material (e.g., silicon), and/or at least an organic material (e.g., that includes an organic dye), among other examples.

In some implementations, the temperature-active coating 206 may be configured to, after undergoing a phase change (e.g., due to an ambient temperature of the temperature-active coating 206, or the component 102 in which temperature-active coating 206 is included, being greater than or equal to the first temperature threshold and less than or equal to the second temperature threshold), no longer be included in the component 102 (e.g., to no longer be disposed on the core structure 204 of the reflective structure 202). For example, the temperature-active coating 206 may dissolve, de-laminate, evaporate, or otherwise self-remove from the core structure 204 of the reflective structure 202.

Therefore, after the phase change of the temperature-active coating 206, the core structure 204 of the reflective structure 202 may be exposed (e.g., the temperature-active coating 206 is not disposed on the core structure 204). Accordingly, the core structure 204 may reflect light associated with a spectral range (e.g., that the core structure 204 is configured to reflect, as described herein) that impinges the core structure 204. In this way, the reflective structure 202 may be configured to have a reflective property after the phase change of the temperature-active coating 206 (e.g., because the core structure 204 is exposed).

Alternatively, in some implementations, the temperature-active coating 206 may be configured to, after undergoing a phase change (e.g., due to an ambient temperature of the temperature-active coating 206, or the component 102 in which temperature-active coating 206 is included, being greater than or equal to the first temperature threshold and less than or equal to the second temperature threshold), remain in the component 102. For example, the temperature-active coating 206 may remain disposed on the core structure 204 of the reflective structure 202. Notably, because of the phase change, one or more optical properties of the temperature-active coating 206 may change. For example, the temperature-active coating 206 may be configured to, after the phase change, pass greater than or equal to a threshold percentage of light that is associated with a spectral range (e.g., one or more portions of the spectral range). The spectral range may be from 100 nm to 10 µm. For example, the temperature-active coating 206 may be configured to pass greater than or equal to the threshold percentage of light associated with some or all of the UV spectral range (e.g., from 100 nm to 379 nm), the visible spectral range (e.g., from 380 nm to 749 nm), and/or the infrared spectral range (e.g., from 750 nm to 10 µm). The threshold percentage may be, for example, 25%, 50%, 65%, 75%, 85%, 90%, 95%, or 99%.

Therefore, after the phase change of the temperature-active coating 206, the temperature-active coating 206 may pass light associated with the spectral range to the core structure 204 of the reflective structure 202, and the core structure 204 of the reflective structure 202 may reflect the light. In this way, the reflective structure 202 may be configured to have a reflective property after the phase change of the temperature-active coating 206 (e.g., because one or more optical properties of the temperature-active coating 206 have changed).

Figs. 2B-2D show similar configurations of the component 102 as shown in Figs. 1A-1C. As shown in Figs. 2B-2D, the base coating 108 may include the one or more reflective structures 202. For example, the one or more reflective structures 202 may be suspended in the base coating 108, such as at respective positions within the base coating 108 (e.g., as shown in Figs. 2B-2D.

As shown in Fig. 2B, the base coating 108 may be disposed on the substrate 104. For example, a bottom surface of the base coating 108 may be disposed on a top surface of the substrate 104. Because the base coating 108 includes the one or more reflective structures 202, it may not be necessary to include the temperature-active coating 106 (e.g., disposed on the base coating 108) in the component 102. For example, while the ambient temperature of the component 102 has not exceeded the first temperature threshold, the temperature-active coatings 206 of the one or more reflective structures 202 included in the base coating 108 may conceal the reflective properties of the core structures 204 of the one or more reflective structures 202. Further, after undergoing a phase change (e.g., due to an ambient temperature of the component 102 that is greater than or equal to the first temperature threshold), the temperature-active coatings 206 of the one or more reflective structures 202 (e.g., by no longer being disposed on the core structures 204 of the one or more reflective structures 202, or by remaining disposed on the core structures 204 but with one or more different optical properties) enable the reflective properties of the core structures 204 of the one or more reflective structures 202 to be revealed. In this way, the base coating 108 may be configured to have a non-reflective property while the ambient temperature of the component 102 is less than or equal to the first temperature threshold, and to have a reflective property after the ambient temperature of the component 102 is greater than or equal to the first temperature threshold and less than or equal to the second temperature threshold.

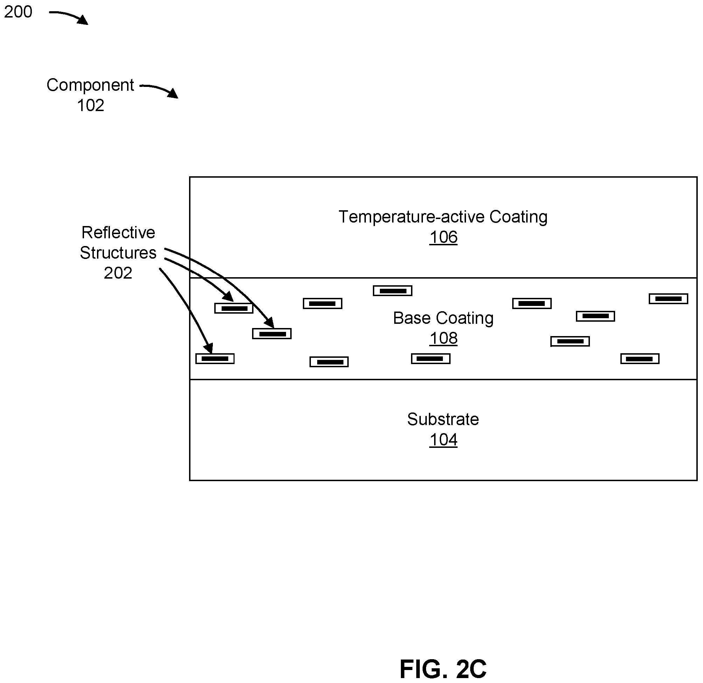

As shown in Figs. 2C-2D, the temperature-active coating 106 may be disposed on the base coating 108 (e.g., that includes the one or more reflective structures 202), and the overcoating 110 may be disposed on the temperature-active coating 106 (e.g., in a similar manner as that described herein in relation to Figs. 1B-1C).

Accordingly, the temperature-active coating 106 and the overcoating may have the same, or similar properties, as described herein in relation to Figs. 1A-1C. In this way, after the phase change of the temperature-active coating 106, the base coating 108 (e.g., utilizing the one or more reflective structures 202) may reflect light associated with a spectral range that impinges on the base coating 108 (e.g., directly, such as because the temperature-active coating 106 and the overcoating 110 have been removed, or indirectly, such as via the temperature-active coating 106 and the overcoating 110).

As indicated above, Figs. 2A-2D are provided as examples. Other examples may differ from what is described with regard to Figs. 2A-2D.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A component, comprising:
a substrate;
a base coating disposed on the substrate; and
a temperature-active coating disposed on the base coating, wherein:
the temperature-active coating is configured to undergo a phase change when the component is subject to an ambient temperature that is greater than or equal to a first temperature threshold and less than or equal to a second temperature threshold, which is greater than the first temperature threshold, and
the substrate and the base coating are configured to not undergo respective phase changes when the component is subject to an ambient temperature that is greater than or equal to the first temperature threshold and less than or equal to the second temperature threshold.

2. The component of claim 1, wherein the first temperature threshold is greater than or equal to 150° Celsius, and the second temperature threshold is less than or equal to 200° Celsius.

3. The component of claim 1 or claim 2, wherein the base coating includes one or more reflective structures,
wherein each reflective structure is configured to reflect greater than or equal to a threshold percentage of light associated with a spectral range from 100 nanometers to 10 micrometers,
wherein the threshold percentage of light is greater than or equal to 85%.

4. The component of any of claims 1 to 3, wherein the temperature-active coating is configured to, after undergoing a phase change when the component is subject to an ambient temperature that is greater than or equal to the first temperature threshold and less than or equal to the second temperature threshold:
remain disposed on the base coating; or
remain disposed on the base coating, and
pass greater than or equal to a threshold percentage of light associated with a spectral range from 100 nanometers to 10 micrometers, wherein the threshold percentage of light is greater than or equal to 35%; or
no longer be disposed on the base coating.

5. The component of any of the preceding claims, further comprising:
an overcoating disposed on the temperature-active coating, wherein:
the overcoating is configured to no longer be disposed on the temperature-active coating after the temperature-active coating undergoes a phase change when the component is subject to an ambient temperature that is greater than or equal to the first temperature threshold and less than or equal to the second temperature threshold.

6. The component of claim 5, wherein the overcoating is configured to, when disposed on the temperature-active coating, block greater than or equal to a threshold percentage of light associated with a spectral range from 100 nanometers to 10 micrometers,
wherein the threshold percentage of light is greater than or equal to 85%.

7. A component, comprising:
a substrate; and
a base coating disposed on the substrate, wherein:
the base coating includes one or more reflective structures,
wherein each reflective structure includes a core structure and a temperature-active coating disposed on the core structure, wherein:
the temperature-active coating is configured to undergo a phase change when the component is subject to an ambient temperature that is greater than or equal to a first temperature threshold and less than or equal to a second temperature threshold, which is greater than the first temperature threshold, and
the core structure is configured to not undergo a phase change when the component is subject to an ambient temperature that is greater than or equal to the first temperature threshold and less than or equal to the second temperature threshold.

8. The component of claim 7, wherein the first temperature threshold is greater than or equal to 150° Celsius, and the second temperature threshold is less than or equal to 200° Celsius.

9. The component of claim 7 or claim 8, wherein the core structure of each reflective structure is configured to reflect greater than or equal to a threshold percentage of light associated with a spectral range from 100 nanometers to 10 micrometers,
wherein the threshold percentage of light is greater than or equal to 85%.

10. The component of any of claims 7 to 9, wherein the temperature-active coating of each reflective structure is configured to, after undergoing a phase change when the component is subject to an ambient temperature that is greater than or equal to the first temperature threshold and less than or equal to the second temperature threshold:
remain disposed on the core structure of the reflective structure; or
remain disposed on the core structure of the reflective structure, and
pass greater than or equal to a threshold percentage of light associated with a spectral range from 100 nanometers to 10 micrometers, wherein the threshold percentage of light is greater than or equal to 35%; or
no longer be disposed on the core structure of the reflective structure.

11. The component of any of claims 7 to 10, further comprising:
another temperature-active coating disposed on the base coating, wherein:
the other temperature-active coating is configured to undergo a phase change when the component is subject to an ambient temperature that is greater than or equal to the first temperature threshold.

12. The component of claim 11, further comprising:
an overcoating disposed on the other temperature-active coating, wherein:
the overcoating is configured to no longer be disposed on the temperature-active coating after the temperature-active coating undergoes a phase change when the component is subject to an ambient temperature that is greater than or equal to the first temperature threshold and less than or equal to the second temperature threshold; and/or
the overcoating is configured to, when disposed on the other temperature-active coating, block greater than or equal to a threshold percentage of light associated with a spectral range from 100 nanometers to 10 micrometers, wherein the threshold percentage of light is greater than or equal to 85%.

13. A component, comprising:
a base coating;
a temperature-active coating disposed on the base coating; and
an overcoating, wherein:
the temperature-active coating is configured to undergo a phase change when the component is subject to an ambient temperature that is greater than or equal to a first temperature threshold and less than or equal to a second temperature threshold, which is greater than the first temperature threshold, and
the base coating and the overcoating are configured to not undergo respective phase changes when the component is subject to an ambient temperature that is greater than or equal to the first temperature threshold and less than or equal to a second temperature threshold.

14. The component of claim 13, wherein the base coating includes one or more reflective structures,
wherein each reflective structure includes a core structure and another temperature-active coating disposed on the core structure,
wherein the other temperature-active coating is configured to undergo a phase change when the component is subject to an ambient temperature that is greater than or equal to the first temperature threshold.

15. The component of claim 13 or claim 14, wherein at least one of:
the temperature-active coating is configured to, after undergoing a phase change when the component is subject to an ambient temperature that is greater than or equal to the first temperature threshold and less than or equal to the second temperature threshold, no longer be disposed on the base coating; or
the overcoating is configured to no longer be disposed on the temperature-active coating after the temperature-active coating undergoes a phase change when the component is subject to an ambient temperature that is greater than or equal to the first temperature threshold and less than or equal to the second temperature threshold.
